# EUROPEAN PATENT SPECIFICATION

(11) **EP 4 354 622 B1**
(45) Date of publication and mention of the grant of the patent: **17.12.2025**
(21) Application number: 23756552.8
(22) Date of filing: 03.02.2023
(51) Int. Cl.: H01M 50/105, H01M 50/209, H01M 50/211, H01M 50/50, H01M 50/507, H01M 50/289, H01M 50/291, H01M 50/204, H01M 50/249, H01M 50/502, H01M 50/271, H01M 10/052

(54) **BATTERY MODULE WITH SCREEN FOR INTERNAL SPACE DIVISION AND BATTERY PACK INCLUDING THE SAME**
BATTERIEMODUL MIT TRENNSCHUTZ ZUR INNENRAUMTEILUNG UND BATTERIEPACK DAMIT
MODULE DE BATTERIE AVEC ÉCRAN POUR DIVISION D'ESPACE INTERNE ET BLOC-BATTERIE LE COMPRENANT

(30) Priority: 18.02.2022 KR 20220021342
(43) Date of publication of application: 17.04.2024
(73) Proprietor: LG Energy Solution, Ltd., Seoul 07335 (KR)
(72) Inventor: LEE, Jung-Hoon, Daejeon 34122 (KR); KIM, Kwang-Mo, Daejeon 34122 (KR); SEONG, Jun-Yeob, Daejeon 34122 (KR); YOON, Seok-Eun, Daejeon 34122 (KR); JUNG, Hye-Mi, Daejeon 34122 (KR)
(74) Representative: Plasseraud IP
(86) International application number: PCT/KR2023/001614
(87) International publication number: WO 2023/158139

(56) References cited:
- EP-A1- 3 828 988
- EP-A1- 4 283 766
- CN-A- 110 739 413
- CN-A- 111 463 510
- CN-U- 213 878 330
- KR-A- 20200 107 213
- KR-A- 20220 017 741

## Description

### TECHNICAL FIELD

The present disclosure relates to a battery module, and more particularly, to a battery module for preventing the spread of combustion effluent, flame and heat to adjacent battery cells to delay fire propagation across the battery cells of the battery module in case where a fire occurs in the battery module.

The present application claims the benefit of Korean Patent Application No. 10-2022-0021342 filed on February 18, 2022 with the Korean Intellectual Property Office.

### BACKGROUND ART

Secondary batteries are attracting attention as a new source of energy for improving eco-friendliness and energy efficiency since they notably reduce fossil fuel use and do not produce by-products from the use of energy.

Accordingly, the use of secondary batteries in various types of devices is increasing. For example, secondary batteries are being used as a source of energy for not only small multifunctional products such as wireless mobile devices or wearable devices but also electric vehicles and hybrid electric vehicles proposed as an alternative to gasoline vehicles and diesel vehicles or energy storage systems (ESSs).

Lithium secondary batteries used widely in recent years have the operating voltage of about 2.5V to 4.5V of each battery. Accordingly, electric vehicles or energy storage systems requiring large capacity and high output use, as a source of energy, a battery module including lithium secondary batteries connected in series and/or in parallel and a battery pack including battery modules connected in series and/or in parallel.

The number of lithium secondary batteries in one battery module or the number of battery modules in one battery pack may increase according to the output or capacity of the battery pack required for electric vehicles.

In case where a fire and explosion occurs, damage to the battery pack including the plurality of lithium secondary batteries may be more serious.

For example, when an event such as a short between the lithium secondary batteries or an abnormal temperature rise occurs in a certain battery module, a large amount of venting gas may be produced in the lithium secondary batteries, and when degradation gets worse, along with the venting gas, high temperature spark including electrode active materials and aluminum particles may be ejected. In this instance, when the venting gas and high temperature spark causes thermal damage to the adjacent other secondary batteries and an additional event occurs in the other secondary batteries, the battery module is explosively wrapped in flame and a user cannot have sufficient time to evacuate.

EP3828988 discloses an ESS module, which includes a cell stack assembly including a cell stack and a plurality of mica barrier assemblies and a pair of bus bar frames coupled to both side portions of the cell stack; and a housing configured to accommodate the cell stack assembly and having a plurality of flow path holes formed at locations corresponding to a front side, a rear side and both side portions of the cell stack assembly.

### DISCLOSURE

### Technical Problem

The present disclosure is designed to solve the above-described problem, and therefore the present disclosure is directed to a battery module for preventing the spread of combustion effluent, flame and heat to adjacent battery cells, in case of a fire in specific battery cells of the battery module, to delay fire propagation across the battery cells.

However, the technical problem to be solved is not limited to the above-described problem, and these and other problems will be clearly understood by those skilled in the art from the detailed description provided below.

### Technical Solution

A battery module according to the present disclosure includes a cell assembly having a cell stack composed of a plurality of battery cells stacked in one direction; a module case accommodating the cell assembly; and a screen unit configured to divide an internal space into left and right parts, the internal space formed between one side portion of the cell assembly in which electrode leads of the battery cells are disposed and one side portion of the module case facing each other.

The screen unit includes a screen plate portion having a width corresponding to a distance between the one side portion of the cell assembly and the one side portion of the module case facing each other and a height corresponding to a height of the one side portion of the cell assembly; and a top insertion plate portion extended to a predetermined length from a top of the screen plate portion in a direction perpendicular to the screen plate portion, and a bottom insertion plate portion extended to a predetermined length from a bottom of the screen plate portion.

The screen plate portion may be disposed in the internal space, and the top insertion plate portion and the bottom insertion plate portion may be disposed in contact with a top and a bottom of the cell stack.

The cell assembly may further include a busbar frame having lead slots to allow the electrode leads of the battery cells to pass therethrough, wherein the busbar frame has a shape of a plate which covers a front side or a rear side of the cell stack and forms the one side portion of the cell assembly; and a plurality of busbars disposed in the busbar frame along a same direction as the stack direction of the battery cells and electrically connected to the electrode leads.

The busbar frame may have a frame groove to insert one side edge portion of the screen plate portion in a widthwise direction in between a preset busbar and its adjacent busbar among the plurality of busbars.

The module case may include a case body having an open end and formed in a hollow shape to insert the cell assembly therein along a lengthwise direction; and a case cover coupled to the open end of the case body, facing the one side portion of the cell assembly.

The case body may be configured to insert the cell assembly in the lengthwise direction by an interference fit.

The case body may include a first assembly guide groove disposed in an inner surface of a top plate, extended along the lengthwise direction from the open end and formed corresponding to the width and thickness of the top insertion plate portion; and a second assembly guide groove disposed in an inner surface of a bottom plate, extended along the lengthwise direction from the open end and formed corresponding to the width and thickness of the bottom insertion plate portion.

The screen unit may be configured such that the top insertion plate portion and the bottom insertion plate portion are slidably coupled to the first assembly guide groove and the second assembly guide groove, respectively.

The case cover may include a cover body which comes into contact with other side edge portion of the screen plate portion in a widthwise direction; a cover top having a third assembly guide groove slidably coupled to an end of the top insertion plate portion; and a cover bottom having a fourth assembly guide groove slidably coupled to an end of the bottom insertion plate portion.

The screen unit may include the top insertion plate portion having a width expanded in a first direction, and the bottom insertion plate portion having a width expanded in a direction opposite to the first direction on a basis of the screen plate portion.

A plurality of the screen units may be arranged in the cell assembly, spaced apart along the stack direction of the battery cells.

The screen unit may be configured to detachably attach to the cell assembly.

According to another embodiment of the present disclosure, there may be provided a battery pack including at least one battery module.

According to still another embodiment of the present disclosure, there may be provided a vehicle comprising the battery pack.

### Advantageous Effects

According to an aspect of the present disclosure, there may be provided the battery module for preventing the spread of combustion effluent, flame and heat to adjacent battery cells, in case of a fire in specific battery cells of the battery module, to delay fire propagation across the battery cells.

That is, in the battery module according to the present disclosure, the screen unit divides and separates the residual space (the space between the cell assembly and the case cover) in the battery module where heat, venting gas, high temperature particles or flame generated may move in case of a fire in the specific battery cell. The screen unit prevents the spread of heat, high temperature particles or flame from the battery cell in which the fire occurred to the neighboring battery cells, thereby suppressing or delaying fire propagation or explosion in the battery cells.

### DESCRIPTION OF DRAWINGS

FIG. 1 is a schematic perspective view of a battery module according to an embodiment of the present disclosure.
FIG. 2 is an exploded perspective view of the main components of the battery module of FIG. 1.
FIG. 3 is a schematic perspective view of a screen unit of FIG. 2.
FIG. 4 is a schematic diagram of an example of assembly of a case body and a screen unit according to an embodiment of the present disclosure.
FIG. 5 is a schematic vertical cross-sectional view of parts of a battery module according to an embodiment of the present disclosure.
FIG. 6 is a schematic horizontal cross-sectional view of parts of a battery module according to an embodiment of the present disclosure.
FIG. 7 is a front view of a cell assembly with a screen unit according to an embodiment of the present disclosure.
FIG. 8 is a perspective view showing parts of a cell assembly with a screen unit according to another embodiment of the present disclosure.
FIG. 9 is a diagram corresponding to FIG. 8, showing a battery module according to another embodiment of the present disclosure.
FIG. 10 is a perspective view showing the main components of a battery module according to another embodiment of the present disclosure.

### BEST MODE

Hereinafter, exemplary embodiments of the present disclosure will be described in detail with reference to the accompanying drawings.

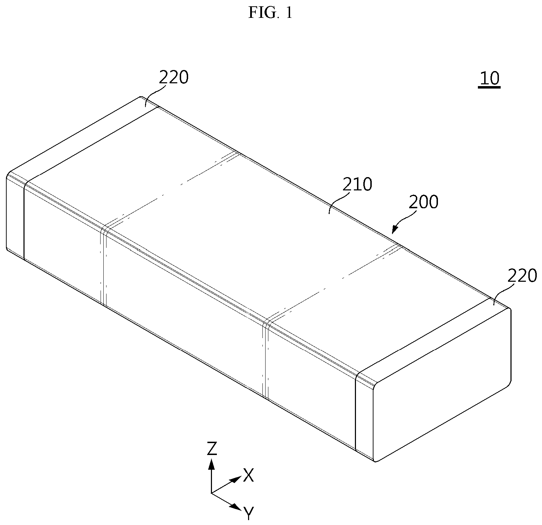

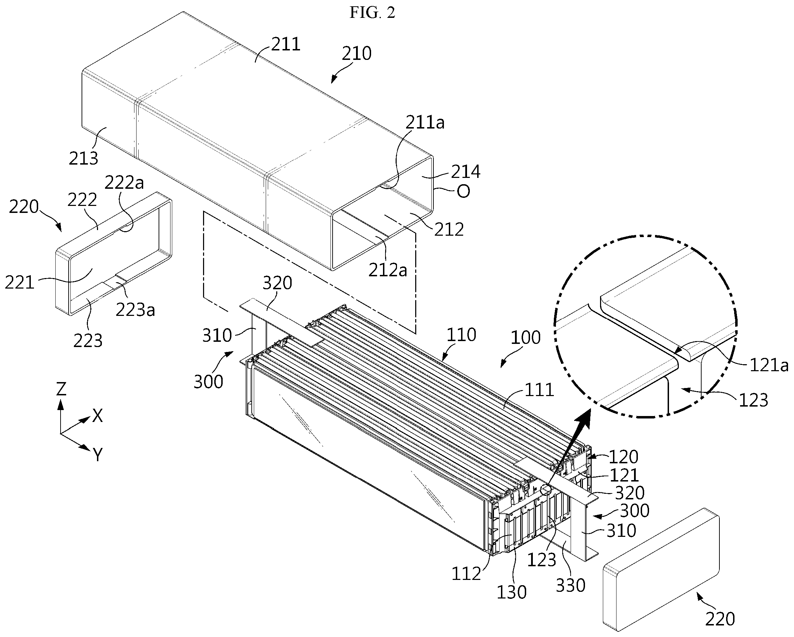

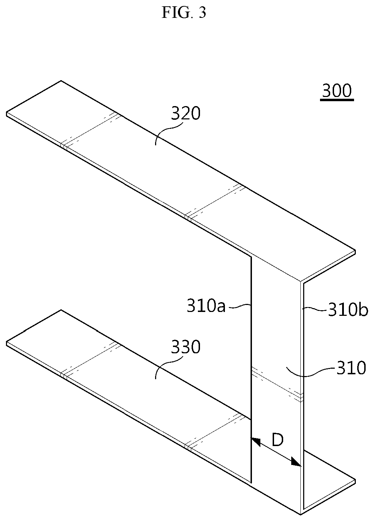

FIG. 1 is a schematic perspective view of a battery module according to an embodiment of the present disclosure, FIG. 2 is an exploded perspective view of the main components of the battery module of FIG. 1, and FIG. 3 is a schematic perspective view of a screen unit of FIG. 2.

Referring to FIGS. 1 to 3, the battery module 10 according to an embodiment of the present disclosure includes a cell assembly 100, a module case 200 and the screen unit 300.

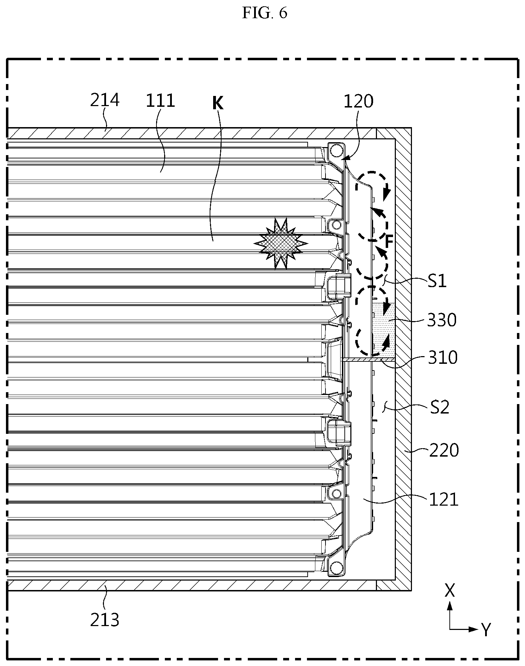

As described in detail below, in the battery module 10 according to this embodiment, the screen unit 300 divides and separates the residual internal space (see S1, S2 of FIG. 6) in the battery module 10, to prevent the spread of heat, high temperature particles or flame from the specific battery cell 111 to other battery cells 111 in case where a fire occurs in specific battery cell(s) 111 of the battery module 10. Accordingly, the battery module according to the present disclosure may delay fire propagation across the battery cells 111 in case of fire.

Describing the cell assembly 100 that is one of the main components of the battery module 10, the cell assembly 100 may include a cell stack 110, a busbar frame 120 and a plurality of busbars 130.

The cell stack 110 is a stack of battery cells 111. That is, as shown in FIG. 2, the cell stack 110 may include the plurality of pouch-type battery cells 111 stacked in one direction (X direction) with wide surfaces standing upright.

The pouch-type battery cell 111 includes an electrode assembly, a pouch case accommodating the electrode assembly, and a pair of electrode leads 112 that are connected to the electrode assembly and drawn from the pouch case and may act as an electrode terminal. The pair of electrode leads 112 are drawn in opposite directions in a lengthwise direction (±Y direction) of the battery cells 111.

The pouch-type battery cell 111 may have the electrode leads 112 only at an end in the Y axis direction, for example, +Y axis direction, as necessary. Meanwhile, the present disclosure is not limited to the specific type or shape of the battery cell 111, and various battery cells 111 known at the time of filing the application may be used to form the cell stack 110 of the present disclosure.

The busbar frame 120 may be formed from an electrically insulating material by injection molding and has a shape of a plate in a sufficient size to cover the front side (+Y direction) or the rear side (-Y direction) of the cell stack 110. Accordingly, in this embodiment, one side of the cell assembly 100 may be where the busbar frame 120 is mounted on the front or rear side of the cell stack 110.

Additionally, the busbar frame 120 includes a plurality of lead slots 122 through which the electrode leads 112 of the pouch-type battery cells 111 pass in +Y axis or -Y axis direction. The plurality of lead slots 122 may be disposed along the stack direction (X direction) of the battery cells 111.

The busbar frame 120 of this embodiment may be configured to fix the plurality of busbars 130, and although not shown, an additional component such as a connector or a printed circuit board (PCB) may be installed in a space above the busbars 130 and the busbar frame 120 may include a support plate 121 to support and fix the additional components.

Additionally, as shown in FIG. 2, the busbar frame 120 according to this embodiment may include a frame groove 123 into which part of a screen plate portion 310 of the screen unit 300 as described below may be inserted between the preset busbar 130 among the plurality of busbars 130 and its neighboring busbar 130. That is, the frame groove 123 may be configured to allow one side edge portion 310a of the screen plate portion 310 in the widthwise direction (-Y direction) to be inserted to a predetermined depth. Additionally, the support plate 121 has a cut-out portion 121a to prevent interference with the protruding support plate 121 when inserting one side edge portion 310a of the screen plate portion 310 into the frame groove 123.

The plurality of busbars 130 is made of an electrical conductive material, for example, a metal such as copper, aluminum, nickel or the like, and the electrode leads 112 of a preset number of battery cells 111 are securely welded and electrically connected to the surface of the preset busbars 130. The busbars 130 of this embodiment are formed in the shape of a rectangular rod having a hollow center through which the electrode leads 112 pass, and are disposed in the busbar frame 120 with the hollow in communication with the lead slots 122 of the busbar frame 120. Additionally, the busbars 130 are disposed in the busbar frame 120 along the same direction as the stack direction of the battery cells 111. The preset battery cells 111 are drawn in the forward direction of the busbars 130 across the busbar frame 120 through the lead slots 122 at corresponding locations at which the electrode leads 112 are placed, and the drawn portions may be bent and securely welded to the surface of the busbars 130.

The module case 200 is the component for protecting the cell assembly 100 from external impacts, and preferably, may be made of a material having high mechanical strength. As shown in FIGS. 1 and 2, the module case 200 according to this embodiment includes a case body 210 and a case cover 220.

The case body 210 may be formed in the shape of a rectangular prism having hollow structure having open ends O at two ends in the lengthwise direction to allow the cell assembly 100 to be inserted along the lengthwise direction. That is, the case body 210 may be configured to insert the cell assembly 100 into the case body 210 slidably or by an interference fit.

The battery module 10 including the case body 210 may be configured to have almost no gap between a top plate 211 of the case body 210 and the top of the cell stack 110, have almost no gap between a bottom plate 212 of the case body 210 and the bottom of the cell stack 110, and have almost no gap between two side plates 213,214 of the case body 210 and two sides of the cell stack 110.

In particular, the case body 210 according to this embodiment includes a first assembly guide groove 211a disposed on the inner surface of the top plate 211, extended along the lengthwise direction (Y direction) from the open end O and formed to fit the width and thickness of a top insertion plate portion 320 of the screen unit 300 as described below, and a second assembly guide groove 212a disposed on the inner surface of the bottom plate 212, extended along the lengthwise direction from the open end O and formed to fit the width and thickness of a bottom insertion plate portion 330 of the screen unit 300 as described below.

The first assembly guide groove 211a and the second assembly guide groove 212a may improve the assembly convenience with the screen unit 300. Additionally, the screen unit 300 may be mounted in the cell assembly 100 with no or little gap between the top of the cell stack 110 and the top plate 211 of the case body 210, and between the bottom of the cell stack 110 and the bottom plate 212 of the case body 210. It will be described in more detail below.

The case cover 220 may be coupled to the open end O of the case body 210, facing one side portion of the cell assembly 100 to prevent the exposure of one side portion of the cell assembly 100 at which the electrode leads 112 of the battery cells 111 are disposed, that is, a region in which the electrode leads 112 are securely connected to the busbars 130 on the busbar frame 120. For example, an inner portion of the case cover 220 may be made of an insulating material and the outer portion may be made of a metal, and the case cover 220 may be securely coupled to the case body 210 by welding.

Additionally, the case cover 220 includes a cover body 221 that comes into contact with the other side edge portion 310b of the screen plate portion 310 in the widthwise direction, a cover top 222 having a third assembly guide groove 222a slidably coupled to the end of the top insertion plate portion 320 and a cover bottom 223 having a fourth assembly guide groove 223a slidably coupled to the end of the bottom insertion plate portion 330.

The third assembly guide groove 222a and the fourth assembly guide groove 223a may be formed on the same axis as the first assembly guide groove 211a and the second assembly guide groove 212a, respectively (see FIG. 2) and may play a role in bringing the other side 310b of the screen plate portion 310 of the screen unit 300 in the widthwise direction as described below into contact with one surface of the cover body 221 to prevent it from moving.

Although not shown for convenience of illustration, the case cover 220 may have a hole or slit to expose the component of the battery module 10 that needs to be exposed, such as a positive terminal and a negative terminal or a connector.

The screen unit 300 is the component for dividing the internal space into left and right parts between one side of the cell assembly 100 and one side of the module case 200 facing each other, and plays a role in dividing the internal space to prevent the spread of heat, high temperature particles or flame to the adjacent battery cells 111 through the internal space in case where a fire occurs in the battery cells 111 of the battery module 10.

The screen unit 300 according to this embodiment is made of a material (for example, silicone, mica) with low thermal conductivity and high resistance to heat, and as shown in FIGS. 2 and 3, includes the screen plate portion 310, the top insertion plate portion 320 and the bottom insertion plate portion 330, and is formed in an approximately C shape and configured to detachably attach to the cell assembly 100.

The screen plate portion 310 may be disposed in the internal space and is configured to have a width (D of FIG. 3) corresponding to the distance between one side of the cell assembly 100 and one side of the module case 200 facing each other and a height corresponding to the height of one side of the cell assembly 100. In this embodiment, one side of the cell assembly 100 corresponds to the busbar frame 120 and one side of the module case 200 corresponds to the case cover 220.

The top insertion plate portion 320 is formed in the shape of a plate extended to a predetermined length from the top of the screen plate portion 310 in a direction perpendicular to the screen plate portion 310, and the bottom insertion plate portion 330 is formed in the shape of a plate extended to a predetermined length in the same direction as the top insertion plate portion 320 from the bottom of the screen plate portion 310.

As shown in FIG. 2, the screen unit 300 may be mounted in the cell assembly 100 by pushing the top insertion plate portion 320 and the bottom insertion plate portion 330 into the cell assembly 100 to bring it into contact with the top and bottom of the cell stack 110. In this instance, one side edge portion 310a of the screen plate portion 310 may be inserted into the frame groove 123 of the busbar frame 120 and the top insertion plate portion 320 and the bottom insertion plate portion 330 may be configured to press the top and bottom of the cell stack 110 to a certain extent to securely fix the screen unit 300 to the cell assembly 100.

Additionally, the screen unit 300 may be configured such that the top insertion plate portion 320 and the bottom insertion plate portion 330 are slidably coupled to the first assembly guide groove 211a and the second assembly guide groove 212a, respectively.

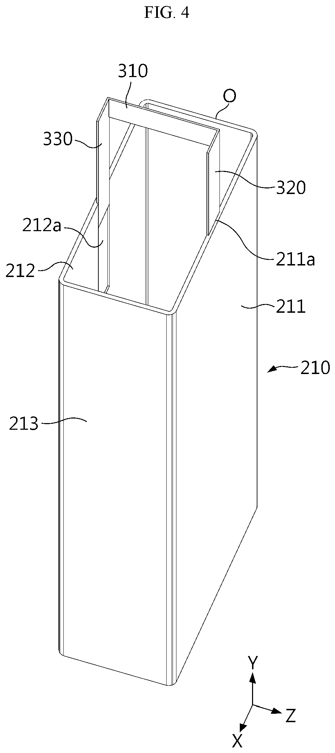

That is, as shown in FIG. 4, the thickness and width of the top insertion plate portion 320 may match the first assembly guide groove 211a and the thickness and width of the bottom insertion plate portion 330 may match the second assembly guide groove 212a, and the top insertion plate portion 320 and the bottom insertion plate portion 330 may be slidably coupled to the first assembly guide groove 211a and the second assembly guide groove 212a, respectively.

By this configuration, it may be possible to easily insert the cell assembly 100 into the case body 210 even when the screen unit 300 is mounted in the cell assembly 100, and after the insertion, prevent a gap between the top of the cell stack 110 and the top plate 211 of the case body 210, and between the bottom of the cell stack 110 and the bottom plate 212 of the case body 210.

Additionally, since the top insertion plate portion 320 and the bottom insertion plate portion 330 are coupled and constrained to the first assembly guide groove 211a and the second assembly guide groove 212a of the case body 210, it may be possible to prevent the screen unit 300 from rotating or twisting when the pressure of venting gas acts on the screen plate portion 310 in case where a fire occurs in the battery module 10.

The top insertion plate portion 320 and the bottom insertion plate portion 330 may be configured such that most part is slidably coupled to the first assembly guide groove 211a and the second assembly guide groove 212a of the case body 210 and the remaining part is slidably coupled to the third assembly guide groove 222a and the fourth assembly guide groove 223a of the case cover 220.

Additionally, when the remaining part of the top insertion plate portion 320 and the bottom insertion plate portion 330 slide and is completely inserted into the third assembly guide groove 222a and the fourth assembly guide groove 223a, the other side edge portion 310b of the screen plate portion 310 may vertically contact the inner surface of the case cover 220. According to the above-described exemplary configuration, the screen unit 300 of this embodiment may be fixed more securely when in contact with the case cover 220.

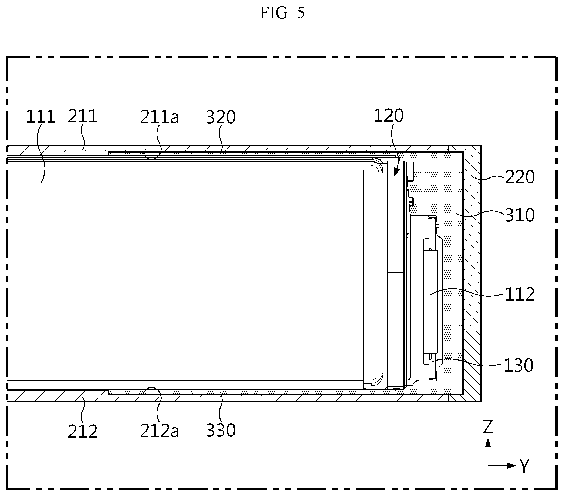

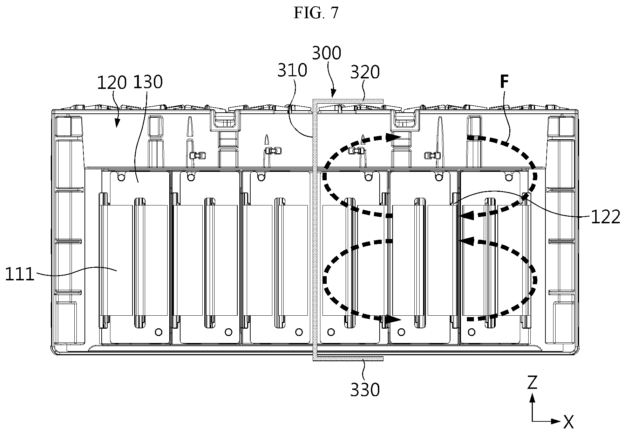

FIG. 5 is a schematic vertical cross-sectional view of parts of the battery module 10 according to an embodiment of the present disclosure, FIG. 6 is a schematic horizontal cross-sectional view of parts of the battery module 10 according to an embodiment of the present disclosure, and FIG. 7 is a front view of the cell assembly 100 with the screen unit 300 according to an embodiment of the present disclosure.

When the screen unit 300 is mounted in the cell assembly 100, and subsequently, the case body 210 and the case cover 220 are assembled, as shown in FIGS. 5 to 7, the internal space between one side of the cell assembly 100 and the case cover 220 facing each other is divided and separated into S1 and S2 by the screen unit 300. In this case, as shown in FIG. 6, when it is assumed that an event occurs in the certain battery cell K, heat, high temperature particles, flame (F and arrow in FIGS. 6, 7) generated in the certain battery cell K is blocked by the screen plate portion 310 and cannot move from S1 to S2. Accordingly, the battery cells 111 disposed at S2 and their electrode leads 112 and the busbars 130 may be affected by less thermal damage, and the time taken for all the battery cells 111 to burn or explode may be delayed.

According to the above-described exemplary configuration, in case where a fire occurs in the specific battery cell 111 in the battery module 10, it may be possible to prevent the spread of combustion effluent, flame, heat generated from the specific battery cell 111 to the other battery cells 111, thereby preventing the instantaneous propagation of explosive fires across the battery cells 111. Accordingly, when a fire occurs in the battery module 10, a user of the battery module 10 according to the present disclosure may be aware of the fire before the fire spreads, and evacuate in a safer situation or take actions for fire suppression.

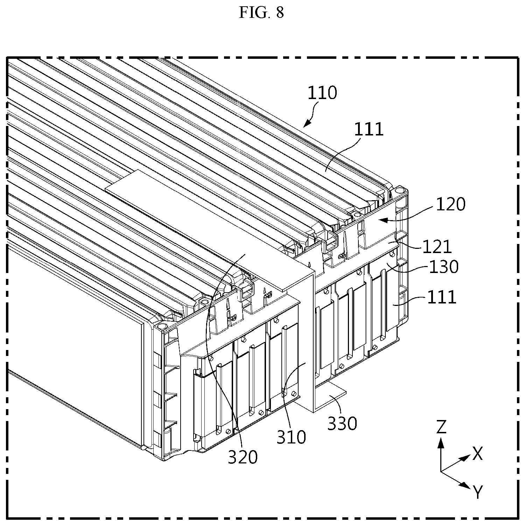

Subsequently, another embodiment of the battery module of the present disclosure will be briefly described with reference to FIGS. 8 to 10.

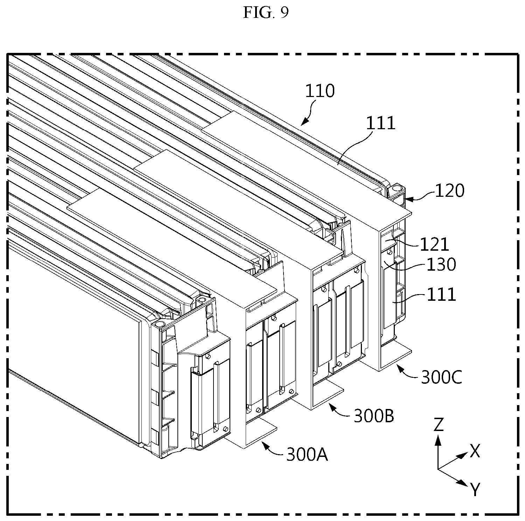

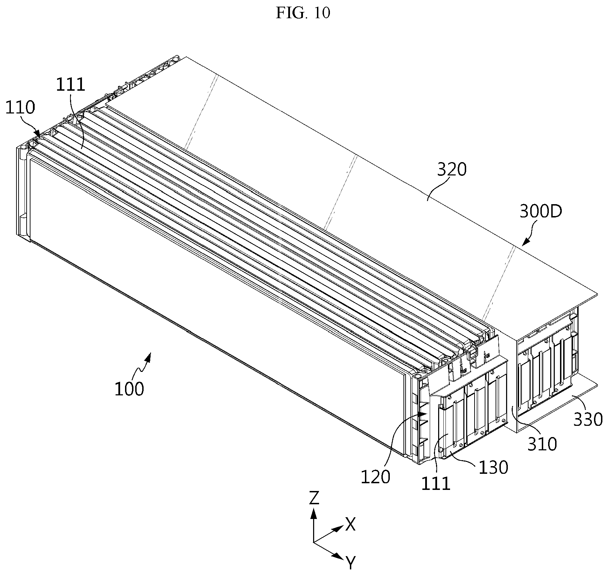

FIG. 8 is a perspective view showing parts of the cell assembly 100 with the screen unit 300 according to another embodiment of the present disclosure, FIG. 9 is a diagram corresponding to FIG. 8, showing the battery module according to another embodiment of the present disclosure, and FIG. 10 is a perspective view showing the main components of the battery module according to another embodiment of the present disclosure.

The same reference numerals as the previous drawings indicate the same elements, and redundant descriptions of the same elements are omitted. The following description is primarily made based on difference(s) between the above-described embodiment and this embodiment.

A difference between the above-described embodiment and the battery module according to another embodiment of the present disclosure is the screen unit 300 in which the top insertion plate portion 320 has the width expanded in a first direction (-X direction), and the bottom insertion plate portion 330 has the width expanded in a direction (+X direction) opposite to the first direction on the basis of the screen plate portion 310. That is, as shown in FIG. 8, the widths of the top insertion plate portion 320 and the bottom insertion plate portion 330 of the screen unit 300 are formed opposite to each other to form the screen unit 300 in an approximately 'Z' shape.

Meanwhile, the battery module according to another embodiment of the present disclosure may include a plurality of screen units 300 arranged in the cell assembly 100, spaced apart from each other along the stack direction (X direction) of the battery cells 111. For example, as in the exemplary configuration of FIG. 9, in another battery module 10 of the present disclosure, the internal space between one side of the cell assembly 100 and the module case 200 facing each other may be divided into four spaces by three screen units 300A,300B,300C.

In this case, when an event occurs in an arbitrary battery cell 111, compared to the exemplary configuration shown in FIGS. 5 to 7, it may be possible to protect more battery cells 111 from heat, high temperature particles, flame generated in the arbitrary battery cell 111. That is, since the internal space between one surface of the cell assembly 100 and the module case 200 facing each other is divided into more sections by the screen units 300A,300B,300C, it may be possible to further restrict the movement of the heat, high temperature particles, flame. Accordingly, it may be possible to significantly delay the propagation time of thermal damage from the battery cell 111 in which the event occurred to the neighboring battery cells 111.

As shown in FIG. 10, the battery module according to another embodiment of the present disclosure includes the screen unit 300D having the expanded width and length of the top insertion plate portion 320 and the bottom insertion plate portion 330, compared to the above-described embodiment.

That is, as shown in FIG. 10, the top insertion plate portion 320 and the bottom insertion plate portion 330 of the screen unit 300D may be configured such that the length corresponds to the length of the cell stack 110 and the width is expanded to cover the left part or the right part of the cell stack 110 on the basis of the screen plate portion 310 of the cell stack 110. In this case, since the top and bottom of the cell stack 110 are covered by the top insertion plate portion 320 and the bottom insertion plate portion 330, when an event occurs in the certain battery cell 111, it may be possible to prevent the propagation of heat, high temperature particles, flame generated from the certain battery cell 111 to the other battery cells 111 through the top or bottom of the cell stack 110.

Meanwhile, a battery pack (not shown) according to the present disclosure may include at least one battery module. The battery pack according to the present disclosure may further include a master Battery Management System (BMS) for integrative control in the charge/discharge of the at least one battery module, a current sensor, a fuse or the like, and a pack case accommodating these components.

The battery pack according to the present disclosure may be applied to an energy storage device, an electric scooter, or a vehicle such as an electric vehicle or a hybrid electric vehicle.

While the present disclosure has been hereinabove described with regard to a limited number of embodiments and drawings, the present disclosure is not limited thereto, and it is apparent that a variety of changes and modifications may be made by those skilled in the art within the technical aspect of the present disclosure and the scope of the appended claims.

The terms indicating directions such as upper, lower, left, right, front and rear are used for convenience of description, but it is obvious to those skilled in the art that the terms may change depending on the position of the stated element or an observer.

## Claims

1. A battery module (10), comprising:
a cell assembly (100) having a cell stack (110) composed of a plurality of battery cells (111) stacked in one direction;
a module case (200) accommodating the cell assembly (100); and
a screen unit (300) configured to divide an internal space (S1, S2) into left and right parts, the internal space formed between one side portion of the cell assembly (100) in which electrode leads (112) of the battery cells are disposed and one side portion of the module case (200) facing each other,
**characterised in that** the screen unit (300) includes:
a screen plate portion (310) having a width corresponding to a distance between the one side portion of the cell assembly (100) and the one side portion of the module case (200) facing each other and a height corresponding to a height of the one side portion of the cell assembly; and
a top insertion plate portion (320) extended to a predetermined length from a top of the screen plate portion (310) in a direction perpendicular to the screen plate portion, and a bottom insertion plate portion (330) extended to a predetermined length from a bottom of the screen plate portion (310).

2. The battery module (10) according to claim **1,** wherein the screen plate portion (310) is disposed in the internal space, and
wherein the top insertion plate portion (320) and the bottom insertion plate portion (330) are disposed in contact with a top and a bottom of the cell stack (110).

3. The battery module according to claim 1, wherein the cell assembly (100) further includes:
a busbar frame (120) having lead slots (122) to allow the electrode leads (112) of the battery cells (111) to pass therethrough, wherein the busbar frame (120) has a shape of a plate which covers a front side or a rear side of the cell stack (110) and forms the one side portion of the cell assembly (100); and
a plurality of busbars (130) disposed in the busbar frame (120) along a same direction as the stack direction of the battery cells and electrically connected to the electrode leads (112).

4. The battery module according to claim 3, wherein the busbar frame (120) has a frame groove (123) to insert one side edge portion of the screen plate portion (310) in a widthwise direction in between a preset busbar (130) and its adjacent busbar (130) among the plurality of busbars.

5. The battery module according to claim 1, wherein the module case (200) includes:
a case body (210) having an open end (O) and formed in a hollow shape to insert the cell assembly (100) therein along a lengthwise direction; and
a case cover (220) coupled to the open end (O) of the case body (210), facing the one side portion of the cell assembly (100).

6. The battery module according to claim 5, wherein the case body (210) is configured to insert the cell assembly (100) in the lengthwise direction by an interference fit.

7. The battery module according to claim 5, wherein the case body (210) includes:
a first assembly guide groove (211a) disposed in an inner surface of a top plate (211), extended along the lengthwise direction from the open end (O) and formed corresponding to the width and thickness of the top insertion plate portion (320); and
a second assembly guide groove (212a) disposed in an inner surface of a bottom plate (212), extended along the lengthwise direction from the open end (O) and formed corresponding to the width and thickness of the bottom insertion plate portion (330).

8. The battery module according to claim 7, wherein the screen unit (300) is configured such that the top insertion plate portion (320) and the bottom insertion plate portion (330) are slidably coupled to the first assembly guide groove (211a) and the second assembly guide groove (212a), respectively.

9. The battery module according to claim 5, wherein the case cover (220) includes:
a cover body (221) which comes into contact with other side edge portion of the screen plate portion (310) in a widthwise direction;
a cover top (222) having a third assembly guide groove (222a) slidably coupled to an end of the top insertion plate portion (310); and
a cover bottom (223) having a fourth assembly guide groove (223a) slidably coupled to an end of the bottom insertion plate portion (310).

10. The battery module according to claim 1, wherein the screen unit (300) includes the top insertion plate portion (320) having a width expanded in a first direction, and the bottom insertion plate portion (330) having a width expanded in a direction opposite to the first direction on a basis of the screen plate portion (310).

11. The battery module according to claim 1, wherein a plurality of the screen units (300) is arranged in the cell assembly (100), spaced apart along the stack direction of the battery cells (111).

12. The battery module according to claim 1, wherein the screen unit (300) is configured to detachably attach to the cell assembly (100).

13. A battery pack comprising the battery module (100) according to any one of claims 1 to 12.

14. A vehicle comprising the battery pack according to claim 13.

## Patentansprüche

1. Batteriemodul (10), umfassend:
eine Zellanordnung (100), welche einen Zellstapel (110) aufweist, welcher aus einer Mehrzahl von Batteriezellen (111) gebildet ist, welche in einer Richtung gestapelt sind;
ein Modulgehäuse (200), welches die Zellanordnung (100) aufnimmt; und
eine Abschirmungseinheit (300), welche dazu eingerichtet ist, einen inneren Raum (S1, S2) in einen linken und recht Teil zu teilen, wobei der innere Raum zwischen einem Seitenabschnitt der Zellanordnung (100), in welchem Elektrodenleitungen (112) der Batteriezellen angeordnet sind, und einem Seitenabschnitt des Modulgehäuses (200), welche einander zugewandt sind, ausgebildet ist,
**dadurch gekennzeichnet, dass** die Abschirmungseinheit (300) umfasst:
einen Abschirmungsplattenabschnitt (310), welcher eine Breite, welche einem Abstand zwischen dem einen Seitenabschnitt der Zellanordnung (100) und dem einen Seitenabschnitt des Modulgehäuses (200), welche einander zugewandt sind, entspricht, und eine Höhe aufweist, welche einer Höhe des einen Seitenabschnitts der Zellanordnung entspricht; und
einen oberen Einführplattenabschnitt (320), welcher sich zu einer vorbestimmten Länge von einer Oberseite des Abschirmungsplattenabschnitts (310) in einer Richtung erstreckt, welche senkrecht zu dem Abschirmungsplattenabschnitt ist, und einen unteren Einführplattenabschnitt (330), welcher sich zu einer vorbestimmten Länge von einer Unterseite des Abschirmungsplattenabschnitts (310) erstreckt.

2. Batteriemodul (10) nach Anspruch 1, wobei der
Abschirmungsplattenabschnitt (310) in dem inneren Raum angeordnet ist, und
wobei der obere Einführplattenabschnitt (320) und der untere Einführplattenabschnitt (330) in Kontakt mit einer Oberseite und einer Unterseite des Zellstapels (110) angeordnet sind.

3. Batteriemodul nach Anspruch 1, wobei die Zellanordnung (100) ferner umfasst:
einen Sammelschienenrahmen (120), welcher Leitungsaussparungen (122) aufweist, um den Elektrodenleitungen (112) der Batteriezellen (111) zu ermöglichen, dort hindurch zu treten, wobei der Sammelschienenrahmen (120) eine Form einer Platte aufweist, welche eine vordere Seite oder eine hintere Seite des Zellstapels (110) bedeckt, und den einen Seitenabschnitt der Zellanordnung (100) ausbildet; und
eine Mehrzahl von Sammelschienen (130), welche in dem Sammelschienenrahmen (120) entlang einer gleichen Richtung wie die Stapelrichtung der Batteriezellen angeordnet sind und mit den Elektrodenleitungen (112) elektrisch verbunden sind.

4. Batteriemodul nach Anspruch 3, wobei der Sammelschienenrahmen (120) eine Rahmennut (123) aufweist, um einen seitlichen Randabschnitt des Abschirmungsplattenabschnitts (310) in einer Breitenrichtung zwischen einer vorfestgelegten Sammelschiene (130) und deren benachbarter Sammelschiene (130) unter der Mehrzahl von Sammelschienen einzuführen.

5. Batteriemodul nach Anspruch 1, wobei das Modulgehäuse (200) umfasst:
einen Gehäusekörper (210), welcher ein offenes Ende (O) aufweist und in einer hohlen Form ausgebildet ist, um die Zellanordnung (100) darin entlang einer Längsrichtung einzuführen; und
eine Gehäuseabdeckung (220), welche mit dem offenen Ende (O) des Gehäusekörpers (210) gekoppelt ist, welches dem einen Seitenabschnitt der Zellanordnung (100) zugewandt ist.

6. Batteriemodul nach Anspruch 5, wobei der Gehäusekörper (210) dazu eingerichtet ist, die Zellanordnung (100) in der Längsrichtung durch eine Presspassung einzuführen.

7. Batteriemodul nach Anspruch 5, wobei der Gehäusekörper (210) umfasst:
eine erste Montage-Führungsnut (211a), welche in einer inneren Fläche einer oberen Platte (211) angeordnet ist, welche sich entlang der Längsrichtung von dem offenen Ende (O) erstreckt und entsprechend der Breite und Dicke des oberen Einführplattenabschnitts (320) ausgebildet ist; und
eine zweite Montage-Führungsnut (212a), welche in einer inneren Fläche einer unteren Platte (212) angeordnet ist, welche sich entlang der Längsrichtung von dem offenen Ende (O) erstreckt und entsprechend der Breite und Dicke des unteren Einführplattenabschnitts (330) ausgebildet ist.

8. Batteriemodul nach Anspruch 7, wobei die Abschirmungseinheit (300) derart eingerichtet ist, dass der obere Einführplattenabschnitt (320) und der untere Einführplattenabschnitt (330) gleitend mit der ersten Montage-Führungsnut (211a) beziehungsweise der zweiten Montage-Führungsnut (212a) gekoppelt ist.

9. Batteriemodul nach Anspruch 5, wobei die Gehäuseabdeckung (220) umfasst:
einen Abdeckungskörper (221), welcher mit einem anderen seitlichen Randabschnitt des Abdeckungsplattenabschnitts (310) in einer Breitenrichtung in Kontakt tritt.
eine Abdeckungsoberseite (222), welche eine dritte Montage-Führungsnut (222a) aufweist, welche gleitend mit einem Ende des oberen Einführplattenabschnitts (310) gekoppelt ist; und
eine Abdeckungsunterseite (223), welche eine vierte Montage-Führungsnut (223a) aufweist, welche gleitend mit einem Ende des unteren Einführplattenabschnitts (310) gekoppelt ist.

10. Batteriemodul nach Anspruch 1, wobei die Abschirmungseinheit (300) den oberen Einführplattenabschnitt (320), welcher eine Breite aufweist, welche in einer ersten Richtung ausgedehnt ist, und den unteren Einführplattenabschnitt (330) umfasst, welcher eine Breite aufweist, welche in einer Richtung ausgedehnt ist, welche der ersten Richtung auf Grundlage des Abschirmungsplattenabschnitts (310) entgegengesetzt ist.

11. Batteriemodul nach Anspruch 1, wobei eine Mehrzahl von Abschirmungseinheiten (300) in der Zellanordnung (100) angeordnet ist, welche entlang der Stapelrichtung der Batteriezellen (111) beabstandet sind.

12. Batteriemodul nach Anspruch 1, wobei die Abschirmungseinheit (300) dazu eingerichtet ist, lösbar an der Zellanordnung (100) angebracht zu sein.

13. Batteriepack, umfassend das Batteriemodul (100) nach einem der Ansprüche 1 bis 12.

14. Fahrzeug, umfassend den Batteriepack nach Anspruch 13.

## Revendications

1. Module de batterie (10), comprenant :
un ensemble élément (100) présentant un empilement (110) d'éléments composé d'une pluralité d'éléments de batterie (111) empilés dans une direction ;
un boîtier (200) de module destiné à accueillir l'ensemble élément (100) ; et
une unité écran (300) configurée pour diviser un espace interne (S1, S2) en parties gauche et droite, l'espace interne étant formé entre une partie latérale de l'ensemble élément (100) dans laquelle sont disposés des fils d'électrode (112) des éléments de batterie et une partie latérale du boîtier (200) de module en regard l'une de l'autre,
**caractérisé en ce que** l'unité écran (300) inclut :
une partie de plaque écran (310) présentant une largeur correspondant à une distance entre la partie latérale de l'ensemble élément (100) et la partie latérale du boîtier (200) de module en regard l'une de l'autre et une hauteur correspondant à une hauteur de la partie latérale de l'ensemble élément ; et
une partie de plaque d'insertion supérieure (320) s'étendant sur une longueur prédéterminée à partir du haut de la partie de plaque écran (310) dans une direction perpendiculaire à la partie de plaque d'écran, et une partie de plaque d'insertion inférieure (330) s'étendant sur une longueur prédéterminée à partir du bas de la partie de plaque écran (310).

2. Module de batterie (10) selon la revendication 1, dans lequel la partie de plaque écran (310) est disposée dans l'espace interne, et
dans lequel la partie de plaque d'insertion supérieure (320) et la partie de plaque d'insertion inférieure (330) sont disposées en contact avec le haut et le bas de l'empilement (110) d'éléments.

3. Module de batterie selon la revendication 1, dans lequel l'ensemble élément (100) inclut en outre :
un cadre (120) de barre omnibus présentant des fentes (122) pour fils destinées à permettre aux fils d'électrode (112) des éléments de batterie (111) de passer à travers celles-ci, dans lequel le cadre (120) de barre omnibus présente la forme d'une plaque qui recouvre un côté avant ou un côté arrière de l'empilement (110) d'éléments et forme la partie latérale de l'ensemble élément (100) ; et
une pluralité de barres omnibus (130) disposées dans le cadre (120) de barres omnibus dans une même direction que la direction d'empilement des éléments de batterie et connectées électriquement aux fils des électrodes (112).

4. Module de batterie selon la revendication 3, dans lequel le cadre (120) de barre omnibus présente une rainure (123) de cadre pour insérer une partie de bord latéral de la partie de plaque écran (310) dans le sens de la largeur entre une barre omnibus (130) prédéfinie et sa barre omnibus (130) adjacente parmi la pluralité de barres omnibus.

5. Module de batterie selon la revendication 1, dans lequel le boîtier (200) de module inclut :
un corps (210) de boîtier ayant une extrémité ouverte (O) et se présentant sous forme creuse pour insérer l'ensemble élément (100) dans celui-ci, dans une direction longitudinale ; et
un couvercle (220) de boîtier couplé à l'extrémité ouverte (O) du corps (210) de boîtier, faisant face à la partie latérale de l'ensemble élément (100).

6. Module de batterie selon la revendication 5, dans lequel le corps (210) de boîtier est configuré pour permettre d'insérer l'ensemble élément (100) dans le sens de la longueur par un ajustement serré.

7. Module de batterie selon la revendication 5, dans lequel le corps (210) de boîtier inclut :
une première rainure de guidage d'assemblage (211a) disposée dans une surface interne d'une plaque supérieure (211), s'étendant dans la direction longitudinale à partir de l'extrémité ouverte (O) et formée pour correspondre à la largeur et à l'épaisseur de la partie de plaque d'insertion supérieure (320) ; et
une deuxième rainure de guidage d'assemblage (212a) disposée sur une surface interne d'une plaque inférieure (212), s'étendant dans la direction longitudinale à partir de l'extrémité ouverte (O) et formée pour correspondre à la largeur et à l'épaisseur de la partie de plaque d'insertion inférieure (330).

8. Module de batterie selon la revendication 7, dans lequel l'unité écran (300) est configurée de sorte que la partie de plaque d'insertion supérieure (320) et la partie de plaque d'insertion inférieure (330) soient couplées de manière coulissante à la première rainure de guidage d'assemblage (211a) et à la deuxième rainure de guidage d'assemblage (212a), respectivement.

9. Module de batterie selon la revendication 5, dans lequel le couvercle (220) de boîtier inclut :
un corps (221) de couvercle qui entre en contact avec l'autre partie de bord latéral de la partie de plaque écran (310) dans une direction transversale ;
une partie supérieure (222) de couvercle présentant une troisième rainure de guidage d'assemblage (222a) couplée de manière coulissante à une extrémité de la partie de plaque d'insertion supérieure (310) ; et
une partie inférieure (223) de couvercle présentant une quatrième rainure de guidage d'assemblage (223a) couplée de manière coulissante à une extrémité de la partie de plaque d'insertion inférieure (310).

10. Module de batterie selon la revendication 1, dans lequel l'unité écran (300) inclut la partie de plaque d'insertion supérieure (320) présentant une largeur s'étendant dans une première direction, et la partie de plaque d'insertion inférieure (330) présentant une largeur s'étendant dans une direction opposée à la première direction sur la base de la partie de plaque écran (310).

11. Module de batterie selon la revendication 1, dans lequel une pluralité d'unités écrans (300) sont agencées dans l'ensemble élément (100), espacées le long de la direction d'empilement des éléments de batterie (111).

12. Module de batterie selon la revendication 1, dans lequel l'unité d'écran (300) est configurée pour se fixer de manière détachable à l'ensemble élément (100).

13. Bloc-batterie comprenant le module de batterie (100) selon l'une quelconque des revendications 1 à 12.

14. Véhicule, comprenant le bloc-batterie selon la revendication 13.
